# EUROPÄISCHE PATENTSCHRIFT

(11) **EP 3 938 683 B1**
(45) Veröffentlichungstag und Bekanntmachung des Hinweises auf die Patenterteilung: **13.11.2024**
(21) Anmeldenummer: 20707179.6
(22) Anmeldetag: 20.02.2020
(51) Int. Cl.: F16H 57/04

(54) **GETRIEBE MIT EINEM SCHMIERÖL VERTEILERTEIL**
TRANSMISSION COMPRISING A LUBRICATING OIL DISTRIBUTER PART
BOÎTE DE VITESSES AVEC UNE PARTIE DISTRIBUTRICE D'HUILE DE GRAISSAGE

(30) Priorität: 12.03.2019 DE 102019001709
(43) Veröffentlichungstag der Anmeldung: 19.01.2022
(73) Patentinhaber: SEW-EURODRIVE GmbH & Co. KG, 76646 Bruchsal (DE)
(72) Erfinder: LUFT, Christian, 76698 Ubstadt-Weiher (DE); KUNIK, Claus, 68753 Waghäusel (DE); FRANK, Daniel, 76703 Kraichtal (DE)
(86) Internationale Anmeldenummer: PCT/EP2020/025080
(87) Internationale Veröffentlichungsnummer: WO 2020/182344

(56) Entgegenhaltungen:
- EP-A1- 2 148 114
- EP-B1- 2 148 114
- WO-A1-2014/108250
- WO-A1-2018/100259
- CN-A- 101 463 896
- CN-U- 205 089 955
- JP-A- H04 277 360
- US-A1- 2013 283 955

## Beschreibung

Die Erfindung betrifft ein Getriebe mit Gehäuse.

Es ist allgemein bekannt, dass ein Getriebe innerhalb seines Gehäuses Schmieröl aufweist. Allerdings entsteht beim Bewegen des Schmieröls mittels drehender Verzahnungsteile des Getriebes Verlustwärme.

**Aus der** CN 101 463 896 A **ist als nächstliegender Stand der Technik ein Getriebe bekannt.**

**Aus der** US 2013/283955 A1 **ist eine Öl-Schmiervorrichtung mit Sammelschiene bekannt.**

**Aus der** EP 2 148 114 A1 **ist eine Schmiervorrichtung bekannt.**

**Aus der** CN 205 089 955 U **ist ein Getriebe mit Ölschmierung bekannt.**

**Aus der** WO 2014/108250 A1 **ist eine Anordnung zum Schmieren von zwei vertikalen Getriebewellen bekannt.**

**Aus der** WO 2018/100259 A1 **ist eine Anordnung zum Leiten von Schmieröl innerhalb einer Hohlwelle eines Getriebes bekannt.**

**Aus der** JP H04 277360 A **ist eine Schmieranordnung in einem Getriebe bekannt.**

Der Erfindung liegt daher die Aufgabe zugrunde, eine möglichst effiziente Nutzung von Schmieröl zu erreichen.

Erfindungsgemäß wird die Aufgabe bei dem Getriebe nach den in Anspruch 1 angegebenen Merkmalen gelöst.

Wichtige Merkmale der Erfindung bei dem Getriebe sind, dass das Getriebe mit Gehäuse ausgeführt ist und mit einem durch eine Ausnehmung im Gehäuse, insbesondere in einem Gehäuseteil des Gehäuses oder in einem Deckelteil des Gehäuses, mit Schmieröl beaufschlagbaren Verteilerteil,
wobei das Verteilerteil einen Sammelbereich und mit dem Sammelbereich verbundene Zuleitrinnen aufweist, mittels derer Schmieröl zu Lagern des Getriebes hinleitbar ist.

Von Vorteil ist dabei, dass eine effiziente Nutzung des Schmieröls erreichbar ist, also möglichst wenig Schmieröl im Getriebe notwendig ist und trotzdem eine ausreichende Schmierung erreichbar ist, insbesondere bei möglichst dauerhaft niedrigem Ölstand. Auf diese Weise sind die Verluste verringerbar. Erfindungsgemäß wird das Schmieröl durch die Ausnehmung ins Getriebe eingefüllt. Beim Einfüllen wird das Schmieröl am Prallblech entlang in einen Sammelbereich geleitet und von dort zu den vorgesehenen Schmierstellen, von denen aus Lager des Getriebes mit Schmieröl versorgt werden.

Somit ist die Befüllung mit Schmieröl bei Inbetriebnahme des Getriebes ausführbar.

Erfindungsgemäß ist ein Prallblech zwischen der Ausnehmung und dem Sammelbereich angeordnet, insbesondere wobei das eben ausgeführte Prallblech in einer Ebene angeordnet ist, welche die Ausnehmung schneidet, insbesondere halbiert, insbesondere so dass durch die Ausnehmung ins Getriebe eingefülltes Schmieröl an beiden Seiten des Prallblechs entlang in den Sammelbereich fließt. Von Vorteil ist dabei, dass im Betrieb bei hohen Temperaturen herangeschleudertes Schmieröl aufgefangen wird und in den Sammelbereich abgeleitet und danach genutzt wird.

Erfindungsgemäß ist das Prallblech mittels einer Höhenverstellung an einem Halteblech fixiert, welches am Gehäuse, insbesondere an dem Deckelteil des Gehäuses, des Getriebes befestigt ist, insbesondere mittels Befestigungsschrauben angeschraubt ist. Von Vorteil ist dabei, dass das Verteilerteil an den Durchmesser des jeweils gewählten Zahnrads anpassbar ist.

Bei einer vorteilhaften Ausgestaltung umfasst die Höhenverstellung mehrere im Prallblech vorgesehene Löcher und ein durch eines der Löcher hindurchragendes Fixierelement, wobei die Löcher jeweils unterschiedlich weit beabstandet sind vom Deckelteil, insbesondere wobei das Fixierelement durch ein durch das Halteblech durchgehendes Loch hindurchragt. Von Vorteil ist dabei, dass eine einfache Verbindung des Prallblechs mit dem Halteblech erreichbar ist, wobei eine Höhenverstellung vorgesehen ist.

Bei einer vorteilhaften Ausgestaltung ist das Verteilerteil mit dem Prallblech verbunden, insbesondere fest verbunden, insbesondere stoffschlüssig verbunden. Von Vorteil ist dabei, dass das Verteilerteil vom Prallblech haltbar ist, das vom Halteblech haltbar ist, das vom Deckelteil gehalten wird. Außerdem ist somit das am Prallblech abfließende Öl zielgerichtet in den Sammelbereich führbar und von dort über die Zuleitungsrinnen zu den Schmierstellen, insbesondere Lagerungen.

Bei einer vorteilhaften Ausgestaltung ist die Ausnehmung durch ein Verschlussteil, insbesondere durch eine Verschlussschraube, verschließbar. Von Vorteil ist dabei, dass nur bei Inbetriebnahme der Innenraum mit der Umgebung korrespondiert.

Bei einer vorteilhaften Ausgestaltung ist das eben ausgeführte Prallblech in einer Ebene angeordnet, welche parallel zur Drehachse des Zahnrads ausgerichtet ist, insbesondere so, dass abhängig von der Drehrichtung des Zahnrads vom Zahnrad abgeschleudertes Schmieröl auf eine jeweilige Seite des Prallblechs aufprallt. Von Vorteil ist dabei, dass beim Einfüllen des Schmieröls ein erster Teil an der Vorderseite des Prallblechs und ein zweiter Teil an der hinteren Seite des Prallblechs herunterfließt in den Sammelbereich. Somit ist eine gewisse Führung des durch die Ausnehmung einströmenden Schmieröls erreichbar.

Bei einer vorteilhaften Ausgestaltung ist das Prallblech innerhalb des Sammelbereichs mit dem Verteilerteil, insbesondere Sammelbereich, verbunden, insbesondere schweißverbunden. Von Vorteil ist dabei, dass das Verteilerteil über das Prallblech gehalten ist.

Bei einer vorteilhaften Ausgestaltung ist der Sammelbereich wannenförmig ausgeführt und/oder weist eine derartige Seitenwand auf und das Verteilerteil, insbesondere der Sammelbereich, ist derart nahe am Zahnrad angeordnet, dass das vom Zahnrad bei dessen Drehbewegung mitgenommene Schmieröl, insbesondere bei einer ersten Temperatur, sich derart hoch an der Seitenwand ansammelt, dass Schmieröl über die Seitenwand in den Sammelbereich fließt. Von Vorteil ist dabei, dass die Seitenwand bei kaltem Öl als Abstreifer fungiert.

Bei einer vorteilhaften Ausgestaltung sammelt sich bei einer zweiten Temperatur, welche höher ist als die erste Temperatur, kein Schmieröl derart hoch an der Seitenwand an, dass es über die Seitenwand in den Sammelbereich fließt, insbesondere wobei das Schmieröl bei der ersten Temperatur eine höhere Viskosität aufweist als bei der zweiten Temperatur. Von Vorteil ist dabei, dass bei warmem Schmieröl dieses keinen dicken Ölfilm um das drehende Zahnrad herum bildet, sondern das Schmieröl abgeschleudert wird zum Prallblech.

Bei einer vorteilhaften Ausgestaltung ist die Seitenwand parallel zur Drehachse des Zahnrads ausgerichtet. Von Vorteil ist dabei, dass die Seitenwand als quer zur Verzahnung des Zahnrads gerichteter Abstreifer fungiert.

Weitere Vorteile ergeben sich aus den Unteransprüchen. Änderungen oder Kombinationsmöglichkeiten von Merkmalen können vorgenommen werden, ohne vom Schutzumfang der Ansprüche abzuweichen.

Die Erfindung wird nun anhand von schematischen Abbildungen näher erläutert:

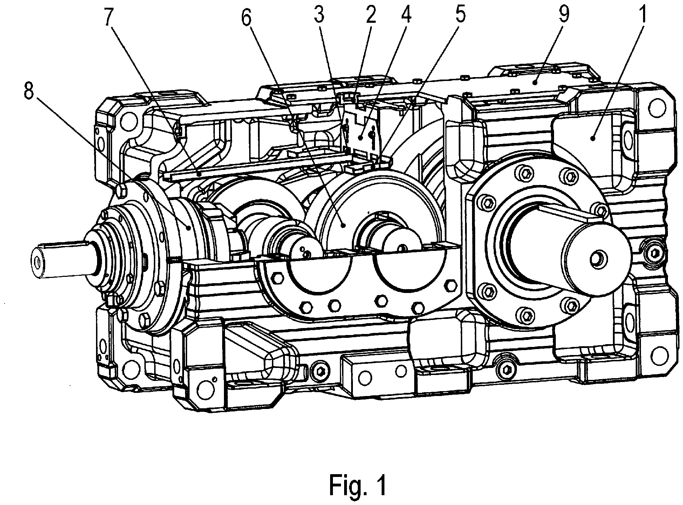

In der Figur 1 ist ein erfindungsgemäßes Getriebe mit Ölzuführung angeschnitten dargestellt.

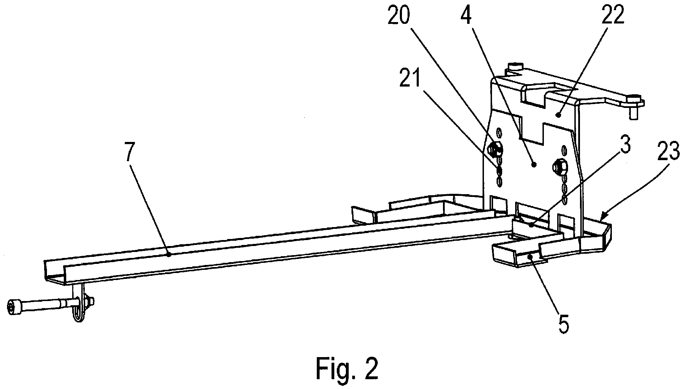

In der Figur 2 ist die Ölzuführung in Schrägansicht aus einer ersten Blickrichtung dargestellt

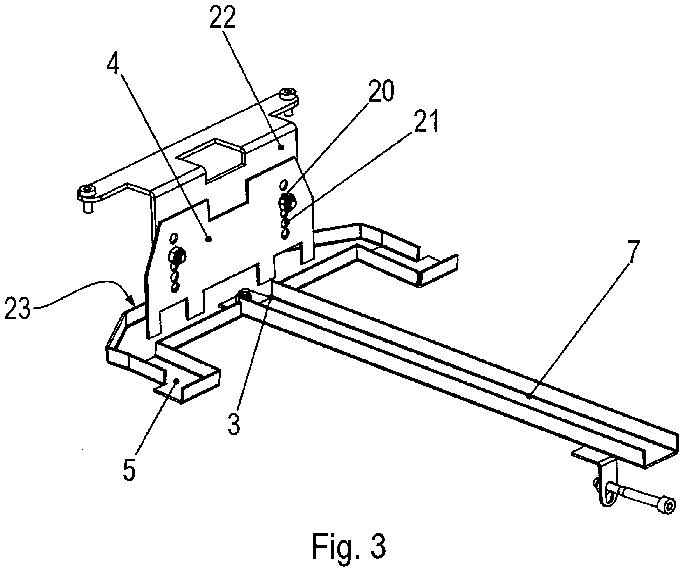

In der Figur 3 ist die Ölzuführung aus einer anderen Blickrichtung dargestellt.

Wie in den Figuren gezeigt, weist das Getriebe drehfest mit Wellen verbundene Zahnränder 6 auf, wobei die Wellen mittels in einem Gehäuseteil 1 aufgenommener Lager drehbar gelagert sind.

Das Getriebe ist zwar mit Schmieröl teilweise befüllt, jedoch ist die Schmierölmenge derart gering, dass nur die Verzahnung des größten Zahnrades in den Ölsumpf eintaucht.

Bei Inbetriebnahme wird zur Sicherstellung der beim Betrieb notwendigen Schmierung Öl in das Getriebe eingefüllt.

Dies erfolgt durch Entfernen eines Verschlussstopfens 2, durch den in einem Deckelteil 9 eine Ausnehmung verschließbar ist. Bei Inbetriebnahme wird also das Schmieröl durch die Ausnehmung in den Innenraumbereich gegossen.

An der Innenseite des Deckelteils 9 ist ein Halteblech 22 der Ölzuführung befestigt. Höhenverstellbar ist am Halteblech 22 ein Prallblech 4 befestigt.

Die Höhenverstellung ist hierbei durch ein Lochraster, insbesondere eine Reihe von Löchern, im Prallblech 4 realisiert, wobei ein Fixierelement 20, insbesondere Schraube mit Mutter, das Prallblech 4 fixiert. Das Fixierelement 20 ragt durch das jeweils gewählte Loch hindurch. Mittels der auf die Schaube des Fixierelements 20 aufgeschraubten Mutter wird das Prallblech 4 gegen das Halteblech 22 gedrückt und dieses somit gegen den Schraubenkopf der Schraube des Fixierelements 20. Auf diese Weise ist also das Prallblech 4 gegen das Halteblech 22 geklemmt und mittels des durch das Prallblech 4 durchgehenden Fixierelements formschlüssig gesichert.

Das Prallblech 4 ist an seinem vom Halteblech 22 abgewandten Endbereich mit einem Verteilerteil verbunden, insbesondere schweißverbunden. Das Verteilerteil weist einen Sammelbereich 3 auf, welcher beim durch die Ausnehmung vorgenommenen Befüllen mit Öl das am Prallblech 4 beidseitig, herabfließende Öl auffängt.

Das aufgefangene Öl wird in Zuleitrinnen 5 und 7 geleitet, welche das Öl zu Lagern von drehbar gelagerten Verzahnungsteilen direkt oder indirekt führen. Beispielsweise führt die Lagerrinne 5 zu einer im Gehäuseteil 1 ausgeformten Gehäusetasche, von der das Öl durch Bohrungen zu im Gehäuseteil 1 aufgenommenen Lagern geführt wird. Weiter beispielsweise führt die Zuleitrinne 7 Öl zu den Lagern der eintreibenden Welle.

Bei Betrieb wird der Verschlussstopfen 2 in die Ausnehmung gesteckt und somit das Deckelteil 9 wieder abgedichtet.

Der Sammelbereich 3 des Verteilerteils ist berandet von einer Seitenwand 23, die vorzugsweise als hochgebogener Laschenbereich herstellbar ist. Die Höhe dieser Seitenwand 23 ist derart gering und das Verteilerteil, insbesondere der Sammelbereich 3, ist derart nah an dem Zahnrad 6 angeordnet, dass das bei der Drehbewegung vom Zahnrad 6 mitgenommene Öl, insbesondere zu Beginn des Betriebs bei noch tiefen Temperaturen, an der Seitenwand 23 abgestreift wird und somit Öl in das Verteilerteil abgestreift wird und/oder einströmt.

Denn bei tiefen Temperaturen ist das Öl hochviskos. Daher ist der vom drehenden Zahnrad 6 aus dem Ölsumpf hochgezogene und mitgeschleppte Ölfilm derart dick, dass die Seitenwand 23 den Ölfilm derart aufbauscht, dass das Öl sogar über die Seitenwand 23 in den Sammelbereich 3 einfließt. Die Seitenwand 23 wirkt also bei kaltem Öl wie ein Abstreifer. Der Abstand zwischen dem Verteilerteil, insbesondere der Seitenwand 23, und dem Kopfkreis der Verzahnung des Zahnrads 6 ist entsprechend gering ausgeführt.

Bei im Betrieb erwärmtem Öl nimmt die Dicke des mitgeschleppten Ölfilms ab und die Seitenwand 23 wirkt nicht mehr oder nur noch geringfügig als Abstreifer. Allerdings wird das vom Zahnrad 6 mitgenommene Öl bei der Drehbewegung vom Zahnrad 6 abgeschleudert. Das Prallblech 4 fängt dann einen Teil des vom Zahnrad 6 bei dessen Drehbewegung abgeschleuderten Öls auf und leitet dieses aufgefangene Öl in den Sammelbereich 3, von wo das Öl dann über die Zuleitrinnen (5, 7) den mit Öl zu versorgenden Stellen des Getriebes zugeleitet wird.

Am Prallblech 4 zum Verteilerteil hin hervorragende, voneinander beabstandete Stegbereiche ausgeformt sind, die als Beabstandungsbereiche ausgebildet sind. Die Stegbereiche ragen in den Sammelbereich hinein und/oder stützen das Prallblech 4 am Sammelbereich 3 ab,
insbesondere wobei mit den Stegbereichen das Prallblech 4 vom die Sammelrinne 3 aufweisenden Verteilerteil beabstandet ist.

Bei weiteren erfindungsgemäßen Ausführungsbeispielen wird der Verschlussstopfen 2 als Verschlussschraube ausgeführt, welche in ein Gewinde des Deckelteils eingeschraubt ist.

### Bezugszeichenliste

1 Gehäuseteil
2 Verschlussstopfen
3 Sammelbereich
4 Prallblech
5 Zuleitrinne
6 Zahnrad
7 Zuleitrinne
8 Lager der eintreibenden Welle
9 Deckelteil
20 Fixierelement, insbesondere Schraube mit Mutter
21 durchgehende Ausnehmungen, insbesondere Lochraster
22 Halteblech
23 Seitenwand der Sammelbereichs 3

## Patentansprüche

1. Getriebe mit Gehäuse und mit einem durch eine Ausnehmung im Gehäuse, insbesondere in einem Gehäuseteil (1) des Gehäuses oder in einem Deckelteil (9) des Gehäuses, mit Schmieröl beaufschlagbaren Verteilerteil,
wobei das Verteilerteil einen Sammelbereich (3) und mit dem Sammelbereich (3) verbundene Zuleitrinnen (5, 7) aufweist, mittels derer Schmieröl zu Lagern (8) des Getriebes hinleitbar ist,
**dadurch gekennzeichnet, dass**
**ein Prallblech (4) zwischen der Ausnehmung und dem Sammelbereich (3) angeordnet ist,**
**das Prallblech (4) mittels einer Höhenverstellung an einem Halteblech (22) fixiert ist, welches am** Gehäuse des Getriebes befestigt ist.

2. Getriebe nach Anspruch 1,
**dadurch gekennzeichnet, dass**
**das eben ausgeführte Prallblech (4) in einer Ebene angeordnet ist, welche die Ausnehmung schneidet, insbesondere halbiert,**
**insbesondere so dass durch die Ausnehmung ins Getriebe eingefülltes Schmieröl an beiden Seiten des Prallblechs (4) entlang in den Sammelbereich (3) fließt.**

3. Getriebe nach einem der vorangegangenen Ansprüche,
**dadurch gekennzeichnet, dass**
das Gehäuse des Getriebes ein Deckelteil (9) umfasst und
**das Halteblech (22) an dem Deckelteil (9) des Gehäuses des Getriebes befestigt ist, insbesondere mittels Befestigungsschrauben angeschraubt ist.**

4. Getriebe nach Anspruch 3,
**dadurch gekennzeichnet, dass**
die Höhenverstellung mehrere im Prallblech (4) vorgesehene Löcher (21) und ein durch eines der Löcher hindurchragendes Fixierelement (20) umfasst,
wobei die Löcher jeweils unterschiedlich weit beabstandet sind vom Deckelteil (9).

5. **Getriebe nach Anspruch 4,**
**dadurch gekennzeichnet, dass**
das Fixierelement (20) durch ein durch das Halteblech (22) durchgehendes Loch hindurchragt.

6. Getriebe nach einem der vorangegangenen Ansprüche,
**dadurch gekennzeichnet, dass**
am Prallblech (4) zum Verteilerteil hin hervorragende, voneinander beabstandete Stegbereiche ausgeformt sind,
insbesondere welche in den Sammelbereich (3) hineinragen und/oder das Prallblech am Sammelbereich (3) abstützen.

7. **Getriebe nach Anspruch 6,**
**dadurch gekennzeichnet, dass**
mit den Stegbereichen das Prallblech (4) vom Verteilerteil beabstandet ist.

8. Getriebe nach einem der vorangegangenen Ansprüche,
**dadurch gekennzeichnet, dass**
das Verteilerteil mit dem Prallblech (4) verbunden, insbesondere fest verbunden, insbesondere stoffschlüssig verbunden, ist.

9. Getriebe nach einem der vorangegangenen Ansprüche,
**dadurch gekennzeichnet, dass**
die Ausnehmung durch ein Verschlussteil, insbesondere durch eine Verschlussschraube, verschließbar ist.

10. Getriebe nach einem der vorangegangenen Ansprüche,
**dadurch gekennzeichnet, dass**
das eben ausgeführte Prallblech (4) in einer Ebene angeordnet ist, welche parallel zur Drehachse eines Zahnrads (6) ausgerichtet ist
insbesondere so, dass abhängig von der Drehrichtung des Zahnrads (6) vom Zahnrad (6) abgeschleudertes Schmieröl auf eine jeweilige Seite des Prallblechs (4) aufprallt.

11. Getriebe nach einem der vorangegangenen Ansprüche,
**dadurch gekennzeichnet, dass**
das Prallblech (4) innerhalb des Sammelbereichs (3) mit dem Verteilerteil, insbesondere Sammelbereich (3), verbunden ist, insbesondere schweißverbunden ist.

12. Getriebe nach Anspruch 10,
**dadurch gekennzeichnet, dass**
der Sammelbereich (3) wannenförmig ausgeführt ist und/oder eine derartige Seitenwand (23) aufweist und das Verteilerteil, insbesondere der Sammelbereich (3) derart nahe am Zahnrad (6) angeordnet ist, dass das vom Zahnrad (6) bei dessen Drehbewegung mitgenommene Schmieröl, insbesondere bei einer ersten Temperatur, sich derart hoch an der Seitenwand (23) ansammelt, dass Schmieröl über die Seitenwand (23) in den Sammelbereich (3) fließt.

13. Getriebe nach Anspruch 12,
**dadurch gekennzeichnet, dass**
bei einer zweiten Temperatur, welche höher ist als die erste Temperatur, kein Schmieröl sich derart hoch an der Seitenwand (23) ansammelt, dass es über die Seitenwand (23) in den Sammelbereich (3) fließt.

14. **Getriebe nach Anspruch 13,**
**dadurch gekennzeichnet, dass**
das Schmieröl bei der ersten Temperatur eine höhere Viskosität aufweist als bei der zweiten Temperatur.

15. Getriebe nach einem der vorangegangenen Ansprüche 12 bis 14,
**dadurch gekennzeichnet, dass**
die Seitenwand (23) parallel zur Drehachse eines Zahnrads (6) ausgerichtet ist.

## Claims

1. A gear unit having a housing and having a distributor part able to be acted upon by lubricating oil through a cutout in the housing, in particular in a housing part (1) of the housing or in a cover part (9) of the housing,
wherein the distributor part has a collection region (3) and feed channels (5, 7) which are connected to the collection region (3) and are able to convey lubricating oil to bearings (8) of the gear unit,
**characterised in that**
a baffle plate (4) is arranged between the cutout and the collection region (3),
the baffle plate (4) is fixed in place on a holding plate (22) by means of a vertical adjustment means,
the holding plate (22) being secured to the housing of the gear unit.

2. A gear unit according to claim 1,
**characterised in that**
the baffle plate (4), realised in a planar manner, is arranged in a plane which intersects the cutout, in particular bisects it,
in particular so that lubricating oil put into the gear unit through the cutout flows along both sides of the baffle plate (4) into the collection region (3).

3. A gear unit according to any one of the preceding claims,
**characterised in that**
the housing of the gear unit comprises a cover part (9) and
the holding plate (22) is secured to the cover part (9) of the housing of the gear unit, in particular screwed thereon by means of fastening screws.

4. A gear unit according to claim 3,
**characterised in that**
the vertical adjustment means comprises a plurality of holes (21) provided in the baffle plate (4) and a fixing element (20) projecting through one of the holes,
wherein the holes are each at a different spacing from the cover part (9).

5. A gear unit according to claim 4,
**characterised in that** the fixing element (20) projects through a hole passing through the holding plate (22).

6. A gear unit according to any one of the preceding claims,
**characterised in that**
elongated-member regions, spaced apart from one another and projecting towards the distributor part, are formed at the baffle plate (4),
in particular which elongated-member regions project into the collection region (3) and/or support the baffle plate at the collection region (3),

7. A gear unit according to claim 6,
**characterised in that**
the elongated-member regions space apart the baffle plate (4) from the distributor part.

8. A gear unit according to any one of the preceding claims,
**characterised in that**
the distributor part is connected to the baffle plate (4), in particular securely connected, in particular connected in an integral manner.

9. A gear unit according to any one of the preceding claims,
**characterised in that**
the cutout can be sealed by a sealing part, in particular by a screw plug.

10. A gear unit according to any one of the preceding claims,
**characterised in that**
the baffle plate (4), realised in a planar manner, is arranged in a plane which is oriented parallel to the rotational axis of a gear wheel (6),
in particular such that, depending on the rotational direction of the gear wheel (6), lubricating oil spun off from the gear wheel (6) strikes a respective side of the baffle plate (4).

11. A gear unit according to any one of the preceding claims,
**characterised in that**
the baffle plate (4) is connected within the collection region (3) to the distributor part, in particular collection region (3), in particular connected by welding.

12. A gear unit according to claim 10,
**characterised in that**
the collection region (3) is trough-shaped and/or has such a lateral wall (23) that, and the distributor part, in particular the collection region (3), is arranged so close to the gear wheel (6) that the lubricating oil entrained by the gear wheel (6) upon the rotary motion of the latter collects, in particular at a first temperature, so high at the lateral wall (23) that lubricating oil flows over the lateral wall (23) into the collection region (3).

13. A gear unit according to claim 12,
**characterised in that**
at a second temperature, which is higher than the first temperature, no lubricating oil collects so high at the lateral wall (23) that is flows over the lateral wall (23) into the collection region (3).

14. A gear unit according to claim 13,
**characterised in that**
the lubricating oil has a higher viscosity at the first temperature than at the second temperature.

15. A gear unit according to any one of the preceding claims 12 to 14,
**characterised in that**
the lateral wall (23) is oriented parallel to the rotational axis of a gear wheel (6).

## Revendications

1. Transmission munie d'un carter et d'une partie répartitrice pouvant être sollicitée par de l'huile lubrifiante à travers un évidement pratiqué dans le carter, notamment dans une partie (1) formant enceinte dudit carter ou dans une partie (9) formant couvercle dudit carter,
ladite partie répartitrice comportant une zone collectrice (3) et des rigoles distributrices (5, 7) reliées à ladite zone collectrice (3), au moyen desquelles de l'huile lubrifiante peut être dirigée vers des paliers (8) de ladite transmission,
**caractérisée par le fait**
**qu'**une tôle déflectrice (4) est interposée entre l'évidement et la zone collectrice (3),
laquelle tôle déflectrice (4) est consignée à demeure, au moyen d'un réglage en hauteur, sur une tôle de retenue (22) fixée au carter de ladite transmission.

2. Transmission selon la revendication 1,
**caractérisée par le fait que**
la tôle déflectrice (4), de réalisation plane, est disposée dans un plan qui coupe l'évidement et le partage notamment en deux,
en particulier de façon telle que de l'huile lubrifiante, déversée dans ladite transmission par l'intermédiaire dudit évidement, afflue dans la zone collectrice (3) en longeant les deux côtés de ladite tôle déflectrice (4).

3. Transmission selon l'une des revendications précédentes,
**caractérisée par le fait que**
le carter de ladite transmission inclut une partie (9) formant couvercle et
la tôle de retenue (22) est fixée à ladite partie (9) formant couvercle dudit carter de la transmission, notamment rapportée par vissage au moyen de vis de fixation.

4. Transmission selon la revendication 3,
**caractérisée par le fait que**
le réglage en hauteur comprend plusieurs trous (21) prévus dans la tôle déflectrice (4), et un élément (20) de blocage à demeure qui traverse l'un desdits trous de part en part,
lesquels trous présentent des espacements respectivement différents vis-à-vis de la partie (9) formant couvercle.

5. Transmission selon la revendication 4,
**caractérisée par le fait que**
l'élément (20) de blocage à demeure traverse, de part en part, un trou pratiqué de manière ininterrompue dans la tôle de retenue (22).

6. Transmission selon l'une des revendications précédentes,
**caractérisée par le fait que**
des régions formant membrures, distantes les unes des autres et faisant saillie en direction de la partie répartitrice, sont façonnées sur la tôle déflectrice (4),
sachant notamment que lesdites régions pénètrent dans la zone collectrice (3) et/ou procurent un appui à ladite tôle déflectrice au niveau de ladite zone collectrice (3).

7. Transmission selon la revendication 6,
**caractérisée par le fait que**
la tôle déflectrice (4) est tenue à distance de la partie répartitrice par les régions formant membrures.

8. Transmission selon l'une des revendications précédentes,
**caractérisée par le fait que**
la partie répartitrice est reliée à la tôle déflectrice (4), notamment reliée de façon rigide, reliée par solidarisation matérielle en particulier.

9. Transmission selon l'une des revendications précédentes,
**caractérisée par le fait que**
l'évidement peut être obturé par une pièce obturatrice, notamment par une vis d'obturation.

10. Transmission selon l'une des revendications précédentes,
**caractérisée par le fait que**
la tôle déflectrice (4), de réalisation plane, est disposée dans un plan orienté parallèlement à l'axe de rotation d'une roue dentée (6),
en particulier de façon telle qu'en fonction du sens de rotation de ladite roue dentée (6), de l'huile lubrifiante projetée par ladite roue dentée (6) vienne rebondir sur un côté respectif de ladite tôle déflectrice (4).

11. Transmission selon l'une des revendications précédentes,
**caractérisée par le fait que**
la tôle déflectrice (4) est reliée, notamment reliée par soudage à la partie répartitrice, en particulier à la zone collectrice (3) à l'intérieur de ladite zone collectrice (3).

12. Transmission selon la revendication 10,
**caractérisée par le fait que**
la zone collectrice (3) est réalisée en forme d'auge et/ou est pourvue d'une paroi latérale (23) et la partie répartitrice, en particulier la zone collectrice (3), occupe un emplacement proche de la roue dentée (6), ladite paroi et ladite proximité étant telles que l'huile lubrifiante charriée par ladite roue dentée (6) lors du mouvement rotatoire de cette dernière, notamment à une première température, s'accumule sur ladite paroi latérale (23) à une hauteur telle que de l'huile lubrifiante afflue dans ladite zone collectrice (3) par l'intermédiaire de ladite paroi latérale (23).

13. Transmission selon la revendication 12,
**caractérisée par le fait que**,
lorsqu'il règne une seconde température plus élevée que la première température, aucune huile lubrifiante ne s'accumule, sur la paroi latérale (23), à une hauteur telle qu'elle afflue dans la zone collectrice (3) par l'intermédiaire de ladite paroi latérale (23).

14. Transmission selon la revendication 13,
**caractérisée par le fait que**
l'huile lubrifiante présente, à la première température, une plus grande viscosité qu'à la seconde température.

15. Transmission selon l'une des revendications 12 à 14 précédentes,
**caractérisée par le fait que**
la paroi latérale (23) est orientée parallèlement à l'axe de rotation d'une roue dentée (6).
